# EUROPEAN PATENT APPLICATION

(11) **EP 1 014 667 A2**
(43) Date of publication of application: **28.06.2000**
(21) Application number: 99310002.3
(22) Date of filing: 13.12.1999
(51) Int. Cl.: H04M 7/00

(54) **Data network call handling method**

(30) Priority: 23.12.1998 GB 9828596
(71) Applicant: Nortel Networks Corporation, Montreal, Quebec H2Y 3Y4 (CA)
(72) Inventor: Garvin, Eugene Declan, Galway City (IE)
(74) Representative: Bewley, Ewan Stuart

(57) **Abstract**

A voice call is carried between a calling party and a called party over a data network. During the call, the calling party or the called party can instruct the system to select an alternative routing for the call, and the system transfers, in response to the instruction, the call to the alternative routing. The alternative routing can be a switched network (PSTN) routing for the call. The alternative routing can be established before dropping the voice over data network call, such as by conferencing the new call, to provide a seamless handover. The instruction from the calling parties can be made by a key sequence.

## Description

### TECHNICAL FIELD

This invention relates to a method and apparatus for handling a communications call and in particular relates to the handling of a voice call over a data network.

### BACKGROUND OF THE INVENTION

There is an increasing interest in providing voice communications over data networks. One of the most common ways for handling voice calls over a data network is voice over internet (VolP), using internet protocol (IP) techniques. The use of data networks to carry voice traffic can significantly reduce costs. However, there are some disadvantages in using data networks to carry voice traffic. Data networks have less stringent delay criteria than dedicated voice networks, which can lead to noticeable, distracting delays during conversations. Following the establishment of an end-to-end VoIP call between two parties, network congestion may occur which results in increased packet loss and/or latency through the IP network.

It is known for the network to route voice over data network calls via the PSTN in the event that quality of a call falls below predefined thresholds. However, this may still result in an overall call which is of unacceptable quality to the calling parties.

The present invention seeks to provide an alternative way of handling a call.

### SUMMARY OF THE INVENTION

A first aspect of the present invention provides a method of handling a call between a calling party and a called party, the call being a voice over data network call, the method comprising the steps of:
- receiving at a switching entity, during the call, an instruction from one of the calling party and the called party to select an alternative routing for the call; and,
- transferring, in response to the instruction, the call to the alternative routing.

This has advantage of allowing users to obtain an improved quality of service in situations where network performance is inconsistent. Allowing the calling parties themselves to determine an acceptable quality of service (QoS) for the call and to take alternative action can help encourage users who are sceptical of the performance of VoIP and are unwilling to commit to a VoIP based network without a good fallback option.

Preferably, the alternative routing is a switched telephone network routing for the call, which should offer a higher quality of service than the data network.

Preferably the step of transferring the call includes the steps of: initiating a new call via the alternative routing and dropping the existing call after the new call has been established. This has the advantage of presenting a seamless handover, with minimal disruption to the calling parties. Advantageously the step of transferring the call includes the step of conferencing the new call into the existing call before dropping the existing call.

Where there is a calling party switch associated with the calling party and a called party switch associated with the called party, both switches having an interface to the alternative routing, the step of conferencing can include a step of conferencing a port of the alternative routing interface of the calling party switch before initiating a call via the alternative routing. This allows a connection to remain between the calling parties even in the event that the data network call should fail before fallback to the alternative routing has been completed.

Advantageously the alternative routing is made via a dedicated port on the called party switch. By using a dedicated port, the called party switch can realise that the call is one which requires fallback treatment. Advantageously the step of conferencing includes the calling party switch signalling the identity of the called party to the called party switch.

Preferably, the step of receiving comprises receiving a signal which identifies the alternative routing. The, or each, alternative routing for the call can be identified by a particular message. The user can select the alternative routing by dialling a key sequence or by pressing a pre-programmed key on the terminal.

The signalling can be by a dual tone multifrequency (DTMF) signal or some other signalling message, such as an ISDN message.

Another aspect of the invention provides apparatus for use in a communications system which is handling a call between a calling party and a called party, the call being a voice over data network call, the apparatus comprising:
- means for receiving, during the call, an instruction from one of the calling party and the called party to select an alternative routing for the call; and,
- means for transferring, in response to the instruction, the call to the alternative routing.

This apparatus may be incorporated in a telecommunications switch.

Preferred features may be combined as appropriate, and may be combined with any of the aspects of the invention, as would be apparent to a person skilled in the art.

### BRIEF DESCRIPTION OF THE DRAWINGS

For a better understanding of the invention, and to show by way of example how it may be carried into effect, embodiments will now be described with reference to the accompanying drawings, in which:
Figure 1 shows a typical system which allows a telephony call to be made via a data network;
Figure 2 shows a system which provides a fallback path via an alternative routing;
Figure 3 shows message flows for the system of figure 2;
Figure 4 shows signalling to achieve the fallback method; and
Figure 5 shows one of the PBXs in more detail.

### DESCRIPTION OF PREFERRED EMBODIMENTS

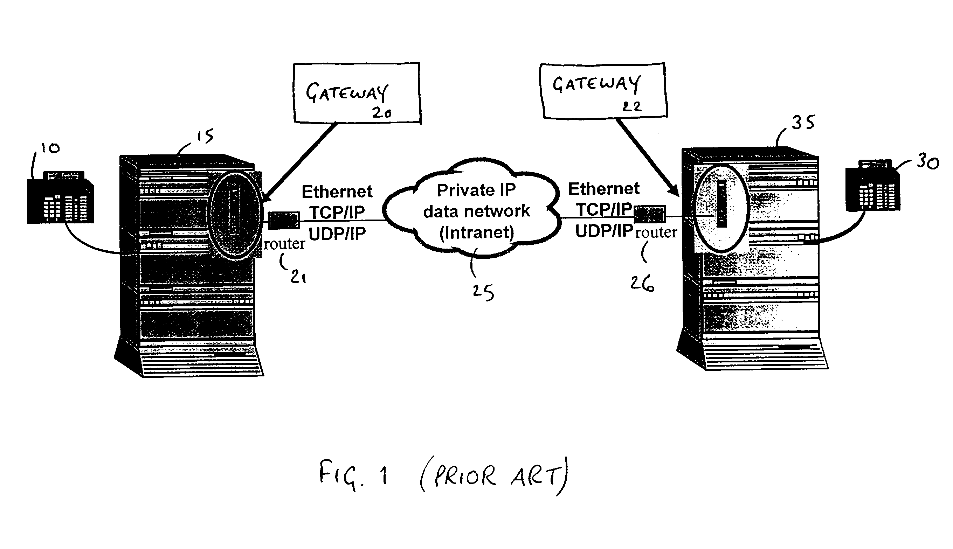

Figure 1 shows a typical system which allows a telephony call to be made via a data network. Terminals of a calling party 10 and a called party 30 are each linked to a respective private branch exchange (PBX) 15, 35. The PBXs 15, 35 each have an interface to a gateway device 20, 22 which performs conversion of traffic between the format used in the PBX and the format necessary for transport over the data network 25. The gateway or a gatekeeper entity handles translation between dialled number and IP addresses where this is required. The traffic is typically carried according to TCP/IP or UDP/IP formats over data network 25; H.323 typically being carried by TCP packets and speech data by UDP packets. The speech or other voice-band information is packaged into data packets which each have a header that carries information to allow the packet to be routed across data network 25. The data network 25 includes routers 21, 26 which perform the routing across the data network 25. The above apparatus is known in the art. The data network is typically a private IP data network or intranet, which is designed and managed to offer a good quality of service. Usually, the delay experienced by data packets crossing the network will be low enough to offer a quality of service which is sufficient, in most circumstances, to support voice traffic.

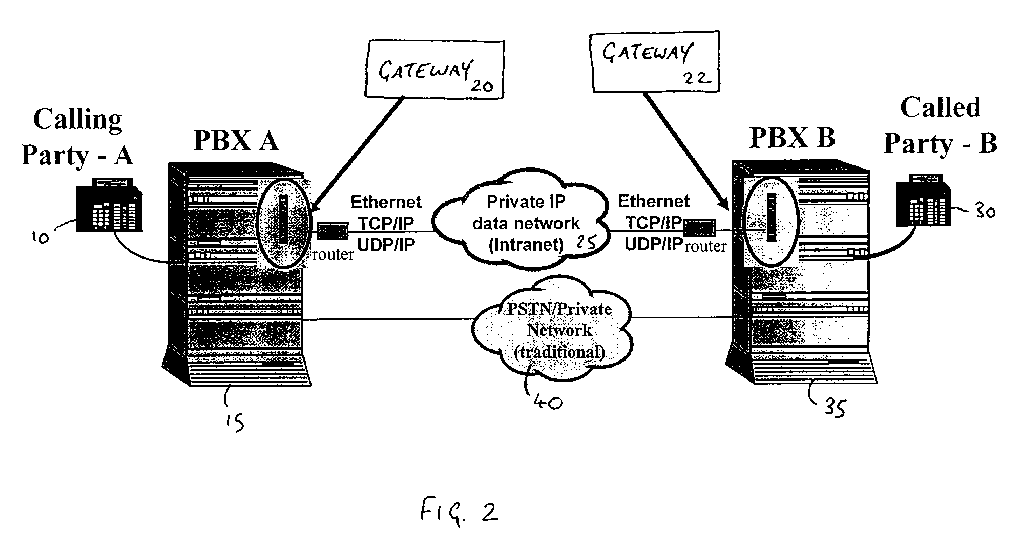

Figure 2 shows the system of figure 1 with the addition of a switched telephone network link 40 between PBXs 15, 25. The switched network link can be via the public switched telephone network (PSTN) or a private network of leased lines. PBXs 15, 25 include suitable interfaces to the switched network, and these would usually already be part of the PBXs.

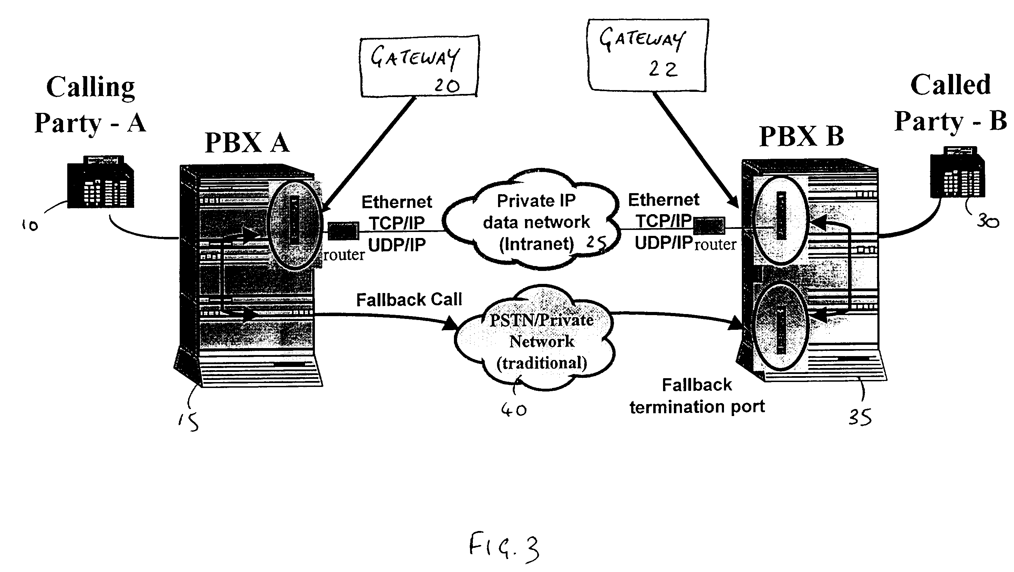

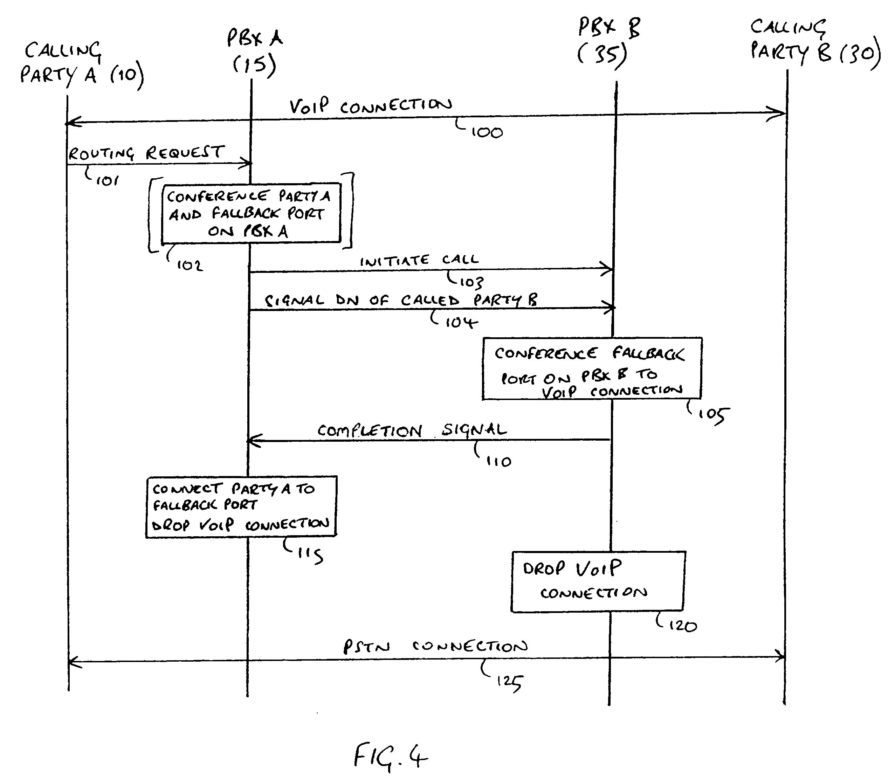

The fallback process will now be described with reference to figure 3 (which shows the system of figure 2 with the addition of message flows) and figure 4. The fallback process allows the party who initiated a voice over IP call to fallback to a PSTN based call by dialling an appropriate key sequence on their dialpad. The sequence causes a separate PSTN call to be established to the destination site. The call is terminated at the remote site and the calls are merged to provide a seamless handover. The original VolP call can then be dropped. The calling party (or the called party) can make the judgement on whether to fallback or not and can invoke the fallback without interrupting the call. The detail of the implementation is dependent upon the host PBX and gateway used.

A typical call scenario will now be described in more detail.

### Call Scenario

**1**. Calling party A 10 dials the called party B 30. Called party B answers, thereby establishing an end to end VoIP call (step 100, fig.4.) The call is set up as a voice over data network call via PBX A, gateway 20, data network 25, gateway 22 and PBX B. Both parties A and B are connected to a PBX and have a signalling path to their respective PBX. The voice path may be end-to-end IP, or the parties may be communicating via VoIP trunk gateways on either end, as shown in fig. 3.
**2**. At some point during the call, network congestion occurs and calling party A decides that the quality of the speech path is unacceptable and fallback is required. Party A then dials a predetermined key sequence, e.g. '*777', (step 101, fig.4.) The signalling can be DTMF signalling. This signalling is detected by PBX A, which recognises the sequence as a fallback request for this call. A signalling detection resource is maintained online, in 'listening mode', for the duration of the call to detect the DTMF sequence. Alternatively, for PBX proprietary telephone sets, a specific feature key can be defined on the user's terminal that performs the same function as dialing the '*777' code. Upon receipt of the appropriate sequence, the call control software will commence the setup of the alternative call. This call can be setup between dedicated fallback units on the two systems (PBXs) that are party to the call or alternatively, can use non-dedicated ports provided the necessary signalling information can be exchanged to indicate to the far side that this is a fallback call. Either way, the system that is terminating the alternative call should know (i) that this is a fallback call and, (ii) the terminating party for the call.
**3**. An additional, optional, step 102 can be invoked at this point. A conference can be set up between the originating party on PBX A and originating fallback port on PBX A prior to initiating the fallback PSTN call. This has the effect of allowing the fallback call to complete once PBX B has replied, even if the VoIP call subsequently drops.
**4**. PBX A initiates a call to PBX B (step 103) using the PSTN 40, or some alternative route that will bypass the original IP call path. The connection can be a TIE or DID. A TIE call is made over a dedicated leased line connection (analog/digital) between two PBXs, and while the PSTN infrastructure may be used to route the call, the call is not terminated on the PSTN. A DID (Direct Inward Dialled) call is terminated on the PSTN and contains sufficient information to terminate directly on the called party's extension. PBX A dials the number of a dedicated fallback port on PBX B.
**5**. PBX B answers on it's fallback port and immediately switches in a DTMF detector. Once PBX B receives the call, it must then receive the digit information regarding who the terminating party is. (This can be via in-band tones that are detected by a tone detection resource on PBX B.) PBX B then establishes a conference (step 105) between the terminating party and the terminating fallback port, using a conference resource.
   Note: If the fallback call is an ISDN call, the exchange of Party B's DN can be communicated via a FACILITY message rather than signalling tones.
**6**. PBX A detects the answer from PBX B and transfers Party B's directory number (DN) as a series of DTMF digits to PBX B (step 104). As an alternative to signalling the DN of party B, PBX A can identify the on-going VoIP connection.
**7**. Party B's DN digits are detected by the fallback port on PBX B. PBX B initiates a conference with Party B's DN (step 104). Once this is established successfully, it then signals back to the originating system that the call has been successfully conferenced at the far end (step 110) using an appropriate signal. As soon as PBX A receives the completion signal, it can immediately transfer the calling party to the fallback port (step 115), dropping the VoIP gateway call in the process. If a conference at PBX A was established at step 102 then the conference is ended at this point by dropping the VoIP call. This establishes an end to end connection to the terminating party on PBX B. As soon as PBX B detects the dropping of the VoIP gateway call, the conference will be converted to a simple call, freeing up the VoIP gateway port and the conference resource (step 120).
**8**. Party A is now left talking to Party B via a PSTN (or alternative) connection and the fallback is complete (step 108.) The call is now equivalent to if the caller had dialled a PSTN based trunk route.

It is possible that the IP link can fail before the fallback to the PSTN is complete. If conferencing is used on PBX A during call setup and PBX B has answered, the call will be seamlessly completed even though the VoIP call subsequently drops. If the VoIP call drops before PBX B answers, the call will be presented to the terminating party of PBX B as a new (PSTN) call.

The above implementation requires the use of a hardware or software entity on PBX B receiving the call that is capable of terminating the fallback call via the PSTN and initiating the required transfer. A Nortel Networks MERIDIAN™ VPS card can perform this function.

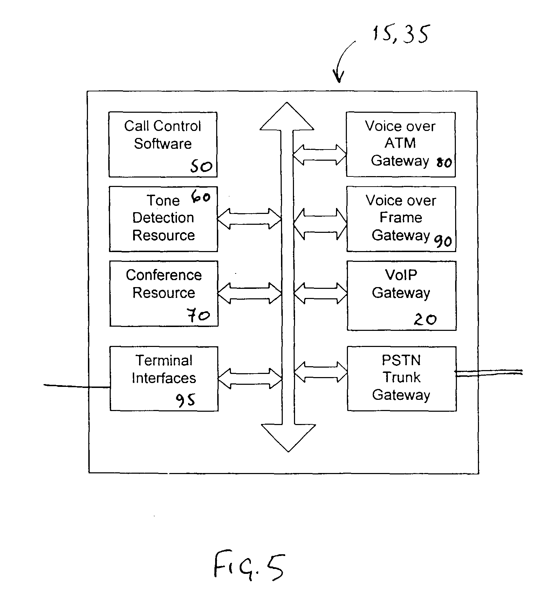

Figure 5 shows a high level view of a typical circuit or packet switched based PBX. The gateways in each case also contain the actual physical interface to the particular network specified. For the VoIP Gateway, the interface is usually Ethernet.

The tone detection resource 60 is shown as a separate entity. It can co-reside with the VoIP Gateway 20 and be dedicated to the gateway or it can be a system-wide resource available to other gateways 80, 90 in the system.

The call control software 50 is responsible for call routing within the system in response to messages from the gateways, the tone detection resource and the terminal interfaces. In the case of user-initiated fallback, the call control software will respond to the fallback digit sequence received via the terminal interface 95, detected by the tone detector 60 or by the gateway itself (where the gateway has built-in tone detection facilities).

### Alternatives

Where the called party initiates the fallback, there are two requirements: (i) the called party must know exactly the calling party's number, and (ii) the called party must be configured to support this functionality and have a tone detection resource online to detect the fallback sequence. If both of these conditions are satisfied, the call sequence is simply a reverse of that previously described.

The port terminating the fallback call on side B could be a DN controlled by a 3rd party application that is responsible for the call control or it could also be implemented as a telset emulation port on a card such as the Nortel Networks MERIDIAN™ VPS card. This is capable of emulating MERIDIAN™ proprietary terminals and is capable of delivering the required functionality to answer the call, detect digits and then transfer the call with/without an external CTI interface. The VPS card contains both simple conferencing and tone detection facilities. For a call in fallback mode, a port on the VPS card is conferenced in at the time that this fallback route is established, by the call control software. While in non-fallback mode, this port operates in 'listen only' mode, checking for the '*777' digit sequence. Once the sequence is detected, the VPS card has the ability to initiate a call to an outgoing trunk port, transfer across the DTMF digit string and then signal to the call control software once the call is established. The call control software then tears down the VoIP call and a call path exists between the calling party, the VPS card and the outgoing trunk (which doesn't need to be dedicated).

While the above description shows an alternative routing via the PSTN, it will be appreciated that other alternative routes could be used, such as frame relay or ATM, providing that these do not suffer from the same impairments as the network which carries the IP packets.

While the above description shows how the alternative routing may be applied between a calling party switch PBX A and a called party switch PBX B, it will be appreciated the alternative routing could also be used for a shorter leg of the total path between the calling party and called party, such as between two switches which are not directly connected to the calling and called parties. The description of the switches as being "associated with the calling party" and "associated with the called party" are intended to mean "associated with the calling party end of the path between the calling and called parties" and "associated with the called party end of the path between the calling and called parties."

The above describes how a predetermined key sequence or a programmed key on the user's terminal can be used to instruct the switch to perform a transfer to an alternative routing. There can be a plurality of different key sequences/programmed keys, each representing a different alternative routing for the call.

## Claims

1. A method of handling a call between a calling party and a called party, the call being a voice over data network call, the method comprising the steps of:
- receiving at a switching entity, during the call, an instruction from one of the calling party and the called party to select an alternative routing for the call; and,
- transferring, in response to the instruction, the call to the alternative routing.

2. The method according to claim 1 wherein the alternative routing is a switched telephone network routing for the call.

3. The method according to claim 1 wherein the step of transferring the call includes the steps of: initiating a new call via the alternative routing and dropping the existing call after the new call has been established.

4. The method according to claim 3 wherein the step of transferring the call includes the step of conferencing the new call into the existing call before dropping the existing call.

5. The method according to claim 4 wherein there is a calling party switch associated with the calling party and a called party switch associated with the called party, both switches having an interface to the alternative routing and wherein the step of conferencing includes the calling party switch signalling the identity of the called party to the called party switch.

6. The method according to claim 4 wherein there is a calling party switch associated with the calling party and a called party switch associated with the called party, both switches having an interface to the alternative network and wherein the step of conferencing includes conferencing a port of the alternative routing interface of the calling party switch before initiating a call via the alternative routing.

7. The method according to claim 1 wherein there is a calling party switch associated with the calling party and a called party switch associated with the called party, both switches having an interface to the alternative routing, and the alternative routing is made via a dedicated port on the called party switch.

8. The method according to claim 1 wherein the step of receiving comprises receiving a signal which identifies the alternative routing.

9. The method according to claim 1 wherein the step of receiving comprises receiving a signalling message.

10. The method according to claim 9 wherein the step of receiving comprises receiving a signalling message which is one of a DTMF signal and an ISDN message.

11. A method of operating a switch in a communications system which is handling a call between a calling party and a called party, the call being a voice over data network call, the method comprising the steps of:
- receiving, during the call, an instruction from one of the calling party and the called party to select an alternative routing for the call; and,
- transferring, in response to the instruction, the call to the alternative routing.

12. Apparatus for use in a communications system which is handling a call between a calling party and a called party, the call being a voice over data network call, the apparatus comprising:
- means for receiving, during the call, an instruction from one of the calling party and the called party to select an alternative routing for the call; and,
- means for transferring, in response to the instruction, the call to the alternative routing.

13. A telecommunications switch incorporating the apparatus according to claim 12.
